# EUROPEAN PATENT APPLICATION

(11) **EP 3 392 621 A1**
(43) Date of publication of application: **24.10.2018**
(21) Application number: 17167116.7
(22) Date of filing: 19.04.2017
(51) Int. Cl.: G01F 1/684, G01F 1/692, G01F 15/10, G01P 15/12

(54) **MEMBRANE-BASED THERMAL FLOW SENSOR DEVICE**

(71) Applicant: Sensirion AG, 8712 Stäfa (CH)
(72) Inventor: HORNUNG, Mark, 8712 Stäfa (CH)
(74) Representative: Strässle, Simon

(57) **Abstract**

A membrane-based thermal flow sensor device (1) with a substrate (10) comprising a cavity (11), a membrane (2) spanning said cavity (11) and defining a first membrane side (21) and a second membrane side (22), and a sensitive structure (3). The sensitive structure (3) is arranged on the membrane (2) and comprises a heater element (31) and a temperature element (32;33). The heater element (31) and the temperature element (32;33) are spaced apart from one another across a first portion of said the membrane (2). The membrane (2) is provided with one or more through-openings (41;42;43;44) such as to establish a fluid communication between said first and second membrane sides (21,22). Furthermore, said one ore more through-openings (41;42;43;44) are arranged outside said first portion of said membrane (2). The present invention also relates to a method of fabrication an an to a use of said sensor device.

## Description

### TECHNICAL FIELD

The present invention relates to a membrane-type thermal flow sensor device according to the preamble of claim 1. Moreover, the present invention relates to a method of fabrication of such a device and to a use of such a device for determining a fluid flow.

### PRIOR ART

Micromechanical system (MEMS) membrane-type flow sensor devices are known, for example from EP 1 840 535 A1, EP 3 302 227 A1 and US 2016 161314 A1. These types of flow sensors, especially when mounted into a moulded package, suffer the drawback that the membrane spanning a cavity prevents a swift exchange of fluid between both sides of said membrane, *i.e.* between the cavity and the flow channel space. Accordingly, in such devices it may happen that the fluid on one side of the membrane is different from the fluid of the other side of the membrane. This, in turn, may cause a disadvantageous drift of said sensor device if a slow exchange of the fluids occurs, which, in effect, leads to inacurrate measurements.

In front-side etched bridge structures, such as known for example from US 5,050429 A, the bridge structures instead of the membrane span the cavity. As per architecture, the voids between suspended bridge sections allow for a fast exchange of fluid between the cavity and the flow channel, *i.e.* between the two sides of the bridge. Such bridge structures are, however, not robust against deposition of particles flowing in the flow to be measured. Moreover, said voids between the bridge sections disturb the fluid flow across the bridge structure by causing unwanted pressure effects that may disatvantegously alter the flow.

In front-side etched membrane structures, such as for example the ones by Omron (see https://www.youtube.com/watch?v=WkfMGbZ64xI), the fluid exchange may be sufficient, however, in known devices said openings releasing the membrane are indeed located between the heater element and the temperature element as in this area there is the center of the cavity and therefore the etching agent is introduced there according to prior art. This membrane area is, however, the sensitive area of the membrane where the temperature gradient in the fluid flow is determined. Therefore, the disadvantages of said front-side etched membrane structures are, for example, an unfavorable offset stability and a disadvantageous device-to-device reproduceability due to the structured sensitive area between the heater element and the temperature element. The device-to-device reproduceablity is less accurate than for back-side etched membrane flow sensors. Also, the profile of the flow across the membrane may be adversely disturbed in the area between the thermal element and the heater element due to said openings being arranged therein.

### SUMMARY OF THE INVENTION

Accordingly, it is an object of the present invention to provide an improved membrane-based thermal flow sensor device that overcomes the above-mentioned disadvantages of the state of the art and allows for more precise measurements.

This object is achieved by the feature combination of claim 1. According thereto, in a first aspect, a membrane-based thermal flow sensor device, in particular a MEMS device, for measuring a fluid flow, is suggested that comprises:
i) a substrate comprising cavity, preferably a back-side etched cavity;
ii) a membrane, wherein said membrane spans said cavity and defines a first membrane side and a second membrane side; and
iii) a sensitive structure, wherein said sensitive structure is arranged on said membrane and comprises at least one heater element and at least one temperature element associated with said at least one heating element, wherein said at least one heater element and said at least one temperature element are spaced apart across a first portion (extending along the membrane) of said membrane. Of course, the sensor device may comprise more than one cavity and more than one membrane.

The above-stated object is achieved in that said membrane is provided with one or more through-openings extending from said first membrane side to a second membrane side such as to establish a fluid communication between said first and second membrane sides; and in that all of said one or more through-openings are arranged outside said first portion of said membrane.

In other words, the first portion, that extends along the membrane, is free of such through-openings; in yet other words, the first portion of the membrane is continuous or completely closed or uniform; in yet other words, the first portion of the membrane is without any through-openings or opening-free; in yet other words.

Such through-openings may disturb the fluid flow and therefore have to be arranged outside the first portion.

The substrate may, in some embodiments, be a silicon substrate or any other substrate used in MEMS technology. By placing the sensitive structure onto said cavity-spanning membrane, the former is thermally decoupled from the substrate which is beneficial to measurement accuracy.

In the context of the present invention, the term *"heater element"* may refer to an element that produces heat. Said heat is transferred, at least in part, to the fluid that flows across the heater element. The temperature element then measures, at a specific location, the temperature of at least some of the fluid that was guided across the heater element.

In the context of the present invention, the term *"temperature element"* may refer to an element that is adapted for sensing an absolute or relative temperature. In some embodiments, the temperature element may be a resistivity temperature sensor or a thermopile or any other temperature sensor element.

In the context of the present invention, the term *"first portion of said membrane"* may refer, in analogy to the term *"wind shadow"* for example in flying, to a membrane portion arranged in the *flow shadow* of the upstream element selected from the at least one heater element and the at least one associated temperature element and that extends in flow direction between the upstream and the downstream element. Accordingly, said term *"first portion of said membrane"* may refer to the membrane portion that is arranged, with respect to the flow direction of the fluid flow in use of the device, between said at least one heater element and said at least one associated temperature element and that extends, in transversal direction, between the transversal extensions of the at least one heater element and the at least one associated temperature element.

In some embodiments, the term *"first portion of said membrane"* may refer to the membrane portion that, in geometrical terms, direcly connects the at least one heater element and the at least one associated temperature element over their spacing in flow direction. Accordingly, the first portion may be spanned by an array of straight lines that connect the at least one heater element and the at least one associated temperature element. This is the case, for example, if the upstream element extends, in transversal direction, beyond the downstream element, such that the downstream element is completely comprised in the flow shadow of the upstream element. In other words, the term *"first portion of said membrane"* may refer to any portion of the membrane delimited, in flow direction, by the at least one heater element and the at least one associated temeperature element and further delimeted, in a transverse direction, *i.e.* in a direction within the membrane plane and at right angles to the flow direction, by straight lines approached to the sensitive structure from both possible transverse directions such that, on each side, the straight lines touch, withouth intersecting, said at least one heater element and said at least one associated temperature element.

In some embodiments, the through-openings are arranged away from the heater element between the at least one temperature element and membrane edges (or cavity edges).

In order to define the first portion, the thermally active areas, *i.e* the heat providing areas, of the at least one heater element and the sensitive area of the at least one temperature element are relevant, which do not necessarily coincide with the boundaries of the structural features of the at least one heater element and/or the at least one temperature element.

In some embodiments, the flow is guided in a flow channel, so the flow direction extends along the channel. The membrane is arranged in said flow channel for exposing the sensitive structure to the fluid flow flowing through the flow channel, whilst, for thermally decoupling the sensitive structure from the substrate, said membrane spans said cavity.

Accordingly, the one or more through-openings as proposed by the present invention are arranged between the sensitive structure and the circumferential edge of the membrane, *i.e.* outside the portion of the membrane where flow disturbances, *e.g.* by holes, have significant impact on the fluid flow. In other words, the one or more through-openings are arranged outside the sensitive area of the membrane across which the temperature gradient is determined during flow measurement. Accordingly, the present invention is based on the insight that said one or more through-openings may be arranged in a spanned section the membrane in order to increase a fluid exchange rate, under normal measurement conditions, between the first and second membrane side, or in other words between the cavity and a channel through which the fluids to be measured is guided across the membrane, whilst said one or more through-openings are furthermore arranged in a region of the membrane where a disturbance to the flow profile of the fluid flow does not or only minimally influence the measurement result. Normal measurement conditions depend on the specific fluid and are the conditions for which the flow sensor device is approved by the manufacturer.

In some preferred embodiments, said one or more through-openings may be completely encompassed by said membrane. In other words, said through-openings are not open to lateral edges of said membrane, such as for example recesses that protrude from a lateral edge into the membrane, but are holes in the membrane, wherein lateral edges of the holes are closed and formed by said membrane. However, in some other embodiments, the through openings may well be openings that are open to lateral edges of said membrane.

Preferably, the sensor device according to invention is a back-side etched structure, *i.e.* the cavity is etched from the substrate back-side into the substrate.

In some embodiments said one or more through-openings may be arranged upstream and/or downstream of the heater element. Downstream and upstream locations are the downstream and upstream locations with respect to the fluid flow when using the device. In other words, downstream and upstream locations refer to the intented fluid flow direction.

In some embodiments, at least one of said one or more through-openings is arranged upstream of the heater element and at least one of said one or more through-openings is arranged downstream of the heater element. The terms *"upstream"* and *"downstream"* are to be understood with reference to the fluid flow direction when the device is in use. This fluid flow direction is typically defined by the the architecture of the sensor device, for example, by the direction of the flow channel. It is to be understood, that the present invention also includes devices with more than one fluid flow direction, for example, at bidirectional flow measurement device.

In some embodiments, the membrane has a quadrangular, *e.g.* a substantially rectangular shape, wherein said one or more through-openings are each arranged in at least one or several or all of the corner regions of said membrane. The corner region is typically far away from the first portion of the membrane between the at least one heater element and the at least one temperature element. Accordingly, any corner region is well suited for accommodating one or more through-openings according to the present invention.

In some embodiments, at least one of said one or more through-openings is provided in each of the corner regions of said membrane. This is advantageous, as all passive corner regions are used for fluid exchange purposes which increases the exchange rate and/or allows to use through-openings with smaller cross-sectional areas depending on the specific case.

In some embodiments, said one or more through-openings are chosen such that a total area of said one or more through-openings guarantee a fluid exchange rate between the said first and second membrane sides that has a characteristic time constant in the range of from 0.5 seconds to 10 seconds.

The fluid may preferably be a gas, in particular air. The dimensions and number of through-openings actually depend on the specific fluid to be measured and on the specific measurement conditions.

In some embodiments, a clear width of said one or more through-openings is in the range of from 1 micrometer to 50 micrometers, preferably of from 5 micrometers to 10 micrometers. Such openings are easy to produce and typically sufficient for membrane type thermal flow sensor devices as mentioned above.

In some embodiments, said one or more through-openings are circlular openings. It is, however, also conceivable that slit-like openings or openings of different shapes such as at least partly polyangular and/or rounded openings are used.

It is also conceivable that through-openings all groups of through openings of different shapes are placed in the same membrane.

In some embodiments, the membrane-based thermal flow sensor device comprises one membrane, wherein said sensitive structure comprises one heater element, the heater element being arranged on said membrane, and wherein a first of said at least one temperature element is arranged upstream of said one heater element and a second of said at least one temperature element is arranged downstream of said one heater element.

In some embodiments, at least one of said one or more through-openings is arranged upstream of a downstream end of said upstream first temperature element and/or at least one of said one or more through-openings is arranged downstream of a upstream end of said downstream second temperature element.

A further aspect of the present invention relates to a method for fabrication of a membrane-based thermal flow sensor device according to the present invention, wherein said one or more through-openings in said membrane are introduced into of said membrane outside of said first portion by means of an etching technique.

In some embodiments, the method for fabrication of a membrane-based thermal flow sensor device, the sensor device comprising:
i) a substrate with a cavity;
ii) a membrane, wherein said membrane spans said cavity and defines a first membrane side and a second membrane side; and
iii) a sensitive structure, wherein said sensitive structure is arranged on said membrane and comprises at least one heater element and at least one temperature element associated with said at least one heater element, wherein each of said at least one heater element and said at least one associated temperature element are spaced apart from one another by a first portion of said membrane, includes the step of:
   introducing into said membrane said first portion of said membrane one or more through-openings extending from said first membrane side to a second membrane side such as to establish a fluid communication between said first and second membrane sides.

Said one or more through-openings are preferably introduced by means of an etching technique. Other techniques may be applied.

In yet another aspect, the present invention also relates to the use of the membrane-based thermal flow sensor device according to invention for measuring a flow of the fluid, in particular of the gas, preferably of air or any other gas.

It is to be understood that these embodiments and aspects will be better understood when considered with the description of the preferred embodiments below. Aspects may be combined with one another without departing from the scope of the appended claims and further embodiments may be formed with parts or all the features of the embodiments as described herein.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows, in a top view, an embodiment of the sensor device according to invention with a membrane with through-openings outside a first portion of the membrane and a first embodiment of a sensitive structure;
- Fig. 2: shows, in a cross-sectional view along A-A, the sensor device according to Fig. 1;
- Fig. 3: an schematic time behaviour of an fluid exchange between membrane sides through the through-openings;
- Fig. 4: shows the membrane with the sensistive structure according to Fig. 1 alone;
- Fig. 5: shows the membrane with a sensistive structure according to a second embodiment; and
- Fig. 6: shows the membrane with a sensistive structure according to a third embodiment.

### DESCRIPTION OF PREFERRED EMBODIMENTS

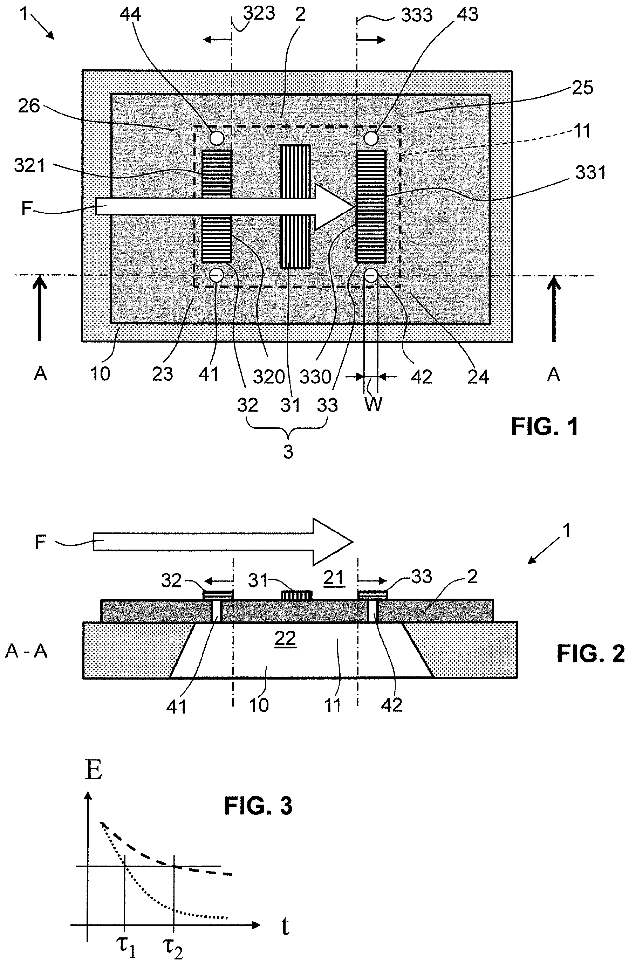

The following, preferred embodiments of the present invention are described with reference to the Figures 1 to 5.

**Figure 1** shows, schematically and in a top view, and **Figure 2** shows, schematically and in a cross-sectional view of along the section line A-A, a first embodiment of the sensor device 1 according to the present invention.

The sensor device 1 comprises a substrate 10 which is provided with a cavity 11. Said cavity 11 is etched into the substrate 10 from the back-side of the substrate and spanned by a membrane 2. On said membrane 2 is arranged a sensitive structure 3 which comprises a first temperature sensor 32 and, spaced apart in the flow direction F of the fluid flow, a second temperature sensor 33 and, arranged therebetween, a heater element 31.

The membrane 2 defines a first membrane side 21 and the second membrane side 22 (see Fig. 2). The membrane 2 in this embodiment is a rectangular shape. It is to be understood, however that the external shape of the membrane 2 may also be of different shape. The rectangular membrane 2 features four corner regions 23, 24, 25, 26.

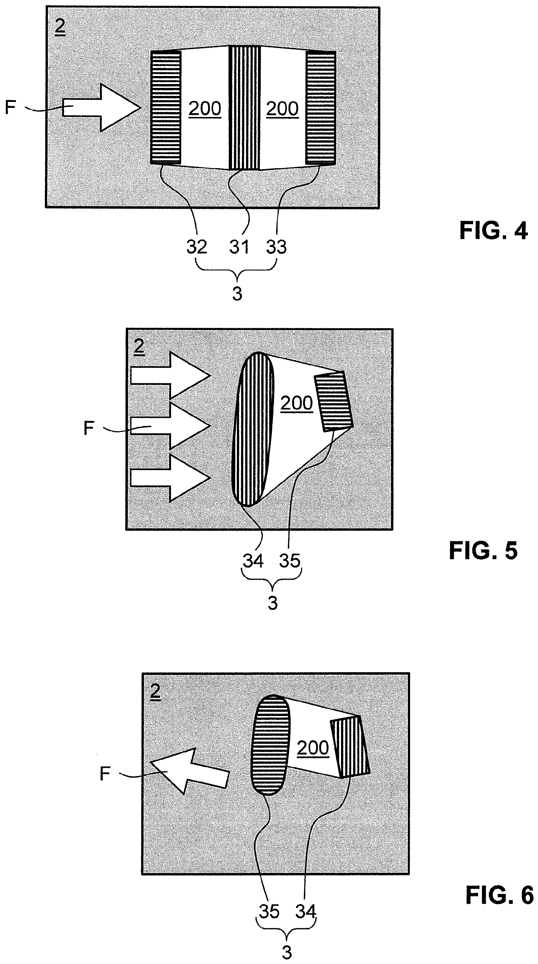

Moreover, the sensitive structure 3 defines a first portion 200 of said membrane 2 as depicted in **Figure 4.** Figure 4 shows 2 first portions 200, which are arranged, in flow direction F, between the first temperature element 32 and to heater element 31 and between the heater element 31 and the second temperature element 33, respectively. The temperature gradient is determined across the first portion 200.

**Figures 5** and **6** show alternatively embodied sensitive structures 3. Figure 5 shows a heater element 34 arranged on the membrane 2 and a temperature element 35, which is arranged on the membrane 2 downstream of the heater element 34. The heater element 34 extends, in both transverse direction, *i.e.* in the directions running within the membrane 2 and substantially perpendicularly to the flow direction F, beyond the temperature element 35. Accordingly, the temperature element 35 is arranged completely in the flow shadow of the heater element 34, if the flow F is a substantially parallel flow as indicated by the three arrows in Fig. 5. Accordingly, the first portion 200 extends between the heater element 34 and the temperature element 35 and between straight lines that connect transversal ends of the heater element 34 and the temperature element 35, wherein said straight lines touch the heater element 34 and the temperature element 35 without intersecting the respective element 34, 35.

Figure 6 shows a flow direction F from the right of Fig. 6 and a heater element 34 that is arranged upstream of the temperature element 35. In this embodiment, the temperature element 34 extends, in both transverse directions, beyond the heater element 34. Accordingly, the temperature element 35 extends beyond the flow shadow associated by the heater element 34. The lateral edges of the first portion 200 extend parallel to the flow direction F. Accordingly, in this embodiment, the first portion 200 is delimited by the flow shadow cast by the heater element 34. In this example, the flow F is also assumed to be a substantially parallel flow.

According to the present invention, through-openings 41, 42, 43, 44 are arranged outside the first portion 200 of said membrane 2. Figure 1 further indicates the lines 323 and 333 with corresponding arrows that show the area, where it is preferred that the through-openings 41, 42, 43, 44 are arranged. In general terms, figure 1 shows a preferred area by means of the lines 323 and 333 with corresponding arrows, where the through-openings 41, 42, 43, 44 are arranged. Accordingly, the preferred area according to Fig. 1 is even smaller than the first portion 200 according to figure 4 showing the same sensitive structure 3 on the membrane 2.

In the embodiment according to Figs. 1, 2, one of the through-openings 41, 42, 43, 44 is arranged in each of the four corner regions 23, 24, 25, 26. It is to be understood, that more than one, *i.e.* a group of through-openings 41, 42, 43, 44 may be arranged in a corner regions 23, 24, 25, 26 or that in some of the corner regions 23, 24, 25, 26 no through-opening 41, 42, 43, 44 is arranged.

The through-openings 41, 42, 43, 44 allow for an improved fluid exchange between the first membrane side 21 and the cavity 11, *i.e.* the second membrane side 22 in order to avoid that different fluids remain for extended periods of time on the first membrane side 21 and the second membrane side 22. In other words, the through-openings 41, 42, 43, 44 allow for a flushing of the cavity 11 within the time period of 0.5 seconds to 10 seconds.

**Figure 3** shows, by means of a dotted line, a time behavior of an exchange E between the two membrane sides 21, 22. If the membrane to according to invention is used, the fluid exchange E at typical measurement conditions shows a characteristic time constant τ₁. This characteristic time constant τ₁ may be the time until the exchange has been completed to a certain degree. Moreover, Fig. 3 shows by means of a dashed line the time behavior of the exchange E between two membrane sides of the conventional membrane without the inventive through-openings. In this case, the exchange E is slower, as a consequence, the respective characteristic time constant τ₂ is longer, causing the above-mentioned disadvantages.

In order to achieve such desired characteristic constant τ₁, the number of through-openings 41, 42, 43, 44 as well as the sizes and locations of the through-openings 41, 42, 43, 44 may be chosen appropriately. It is to be understood, that the through-openings 41, 42, 43, 44 may have different sizes and/or cross-sectional shapes.

It is preferred, that the through-openings 42, 43 are arranged downstream of an upstream end 330 of the downstream second temperature element 33, as indicated by line 333 and the corresponding arrow to the right in Fig. 1. Moreover, it is preferred, that the through-openings 41, 44 are arranged upstream of the downstream end 320 of the upstream first temperature element 32, as indicated by line of 323 and the corresponding arrow to the left in Fig. 1.

The through-openings 41, 42, 43, 44 are of circular shapes and have a diameter of 5 micrometers to 10 micrometers or more.

The temperature elements 32, 33, 35 may be themopiles or resistive wire temperature sensors, while the heater element 31, 34 may be a resistive wire arrangement that produces heat by giving off Joule heat due to the ohmic resistance resistive wire that it is appropriately fed by electrical current.

While there are shown and described presently preferred embodiments of the invention, it is to be understood that the invention is not limited thereto but may be variously embodied and practiced otherwise within the scope of the following claims.

**LIST OF REFERENCE SIGNS**

| | | | |
|---|---|---|---|
| 1 | sensor device | 330 | upstream end of 33 |
| 10 | substrate | 331 | downstream end of 33 |
| 11 | cavity | 333 | line |
| | | | |
| 2 | membrane | | |
| 21 | frist side of 2 | 41,42,43,44 | trhough-opening through 2 |
| 22 | second side of 2 | | |
| 23,24,25,26 | corner region of 2 | F | fluid flow direction |
| 200 | first portion of 2 | W | clear width of 41,42,43,44 |
| | | τ₁ | characteristic time constant of fluid exchange through membrane with through-openings |
| 3 | sensitive element | | |
| 31,34 | heater element | | |
| 32,35 | first temperature element | | |
| 320 | downstream end of 32 | τ₂ | characteristic time constant of fluid exchange through membrane without through-openings |
| 321 | upstream end of 32 | | |
| 323 | line | | |
| 33 | second temperature element | | |

## Claims

1. A membrane-based thermal flow sensor device (1) comprising:
iv) a substrate (10) with a cavity (11);
v) a membrane (2), wherein said membrane (2) spans said cavity (11) and defines a first membrane side (21) and a second membrane side (22); and
vi) a sensitive structure (3), wherein said sensitive structure (3) is arranged on said membrane (2) and comprises at least one heater element (31 ;34) and at least one temperature element (32;33;35) associated with said at least one heater element (31;34), wherein each of said at least one heater element (31;34) and said at least one associated temperature element (32;33;35) are spaced apart from one another by a first portion (200) of said membrane (2), **characterized in that**
said membrane (2) is provided with one or more through-openings (41;42;43;44) extending from said first membrane side (21) to a second membrane side (22) such as to establish a fluid communication between said first and second membrane sides (21,22); and
**in that** all of said one or more through-openings (41;42;43;44) are arranged outside said first portion (200) of said membrane (2).

2. The membrane-based thermal flow sensor device (1) according to claim 1, wherein said cavity (11) is formed into said substrate (10) by back-side etching.

3. The membrane-based thermal flow sensor device (1) according to claim 1 or 2, wherein said one or more through-openings (41;42;43;44) are completely encompassed by portions of said membrane (2).

4. The membrane-based thermal flow sensor device (1) according to any one of the preceding claims, wherein said one or more through-openings (41;42;43;44) are arranged upstream or downstream of the at least one heater element (31;34).

5. The membrane-based thermal flow sensor device (1) according to claim 4, wherein at least one of said one or more through-openings (41;42;43;44) is arranged upstream of the at least one heater element (31;34) and at least one of said one or more through-openings (41;42;43;44) is arranged downstream of the at least one heater element (31;34).

6. The membrane-based thermal flow sensor device (1) according to any one of the preceding claims, wherein said membrane (2) has a polyangular shape, preferably quadrangular shape, wherein said one or more through-openings (41;42;43;44) are each arranged in one or more corner regions (23;24;25;26) of said polyangular membrane (2).

7. The membrane-based thermal flow sensor device (1) according to claim 6, wherein at least one of said one or more through-openings (41;42;43;44) is provided in each of the four corner regions (23;24;25;26) of said membrane (2).

8. The membrane-based thermal flow sensor device (1) according to any one of the preceding claims, wherein said one or more through-openings (41;42;43;44) are configured such that a total cross-sectional area of said one or more through-openings (41;42;43;44) allows for a fluid exchange rate, under normal measurement conditions, between the said first and second membrane sides (21,22) having a characteristic time constant (τ₁) in the range of from 0.5 seconds to 10 seconds, wherein preferably the fluid is a gas, in particular air.

9. The membrane-based thermal flow sensor device (1) according to any one of the preceding claims, wherein a clear width (W) of said one or more through-openings (41;42;43;44) is in the range of from 1 micrometer to 50 micrometers, preferably of from 5 micrometers to 10 micrometers.

10. The membrane-based thermal flow sensor device (1) according to any one of the preceding claims, wherein said one or more through-openings (41;42;43;44) have a circlular cross section.

11. The membrane-based thermal flow sensor device (1) according to any one of the preceding claims, comprising one membrane (2), wherein said sensitive structure (3) comprises one heater element (31), said one heater element (31) being arranged on said membrane (2), and wherein one first temperature element (32) of said at least one temperature element (32;33) is arranged upstream of said heater element (31) and one second temperature element (33) of said at least one temperature element (32;33) is arranged downstream of said heater element (31).

12. The membrane-based thermal flow sensor device (1) according to claim 11, wherein at least one of said one or more through-openings (41;42;43;44) is arranged upstream of a downstream end (320) or an upstream end (321) of said first temperature element (32) and/or wherein at least one of said one or more through-openings (41;42;43;44) is arranged downstream of an upstream end (330) or a downstream end (331) of said second temperature element (33).

13. Method for fabrication of a membrane-based thermal flow sensor device (1), the sensor device (1) comprising:
iv) a substrate (10) with a cavity (11), preferably a back-side etched cavity (11);
v) a membrane (2), wherein said membrane (2) spans said cavity (11) and defines a first membrane side (21) and a second membrane side (22); and
vi) a sensitive structure (3), wherein said sensitive structure (3) is arranged on said membrane (2) and comprises at least one heater element (31 ;34) and at least one temperature element (32;33;35) associated with said at least one heater element (31;34), wherein each of said at least one heater element (31;34) and said at least one associated temperature element (32;33;35) are spaced apart from one another by a first portion (200) of said membrane (2), **characterized in that**
one or more through-openings (41;42;43;44) extending from said first membrane side (21) to a second membrane side (22) such as to establish a fluid communication between said first and second membrane sides (21,22) are introduced into said membrane (2) outside said first portion (200) of said membrane (2), preferably by means of an etching technique.

14. Use of the membrane-based thermal flow sensor device (1) according to any one of the preceding claims for measuring a flow of the fluid, in particular of the gas, preferably of air.
